(19) Europäisches Patentamt / European Patent Office / Office européen des brevets

(11) EP 2 963 618 A1

(12) EUROPEAN PATENT APPLICATION
published in accordance with Art. 153(4) EPC

(43) Date of publication:
06.01.2016 Bulletin 2016/01

(51) Int Cl.:
G06T 7/00 (2006.01)    G06F 21/32 (2013.01)

(21) Application number: 15743508.2

(86) International application number:
PCT/JP2015/000300

(22) Date of filing: 23.01.2015

(87) International publication number:
WO 2015/115075 (06.08.2015 Gazette 2015/31)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 31.01.2014 JP 2014018101

(71) Applicant: mofiria Corporation
Tokyo 141-0031 (JP)

(72) Inventor: SUGAWARA, Hiroshi
Tokyo 141-0031 (JP)

(74) Representative: Betten & Resch
Patent- und Rechtsanwälte PartGmbB
Maximiliansplatz 14
80333 München (DE)

(54) **PERSONAL IDENTIFICATION SYSTEM, PERSONAL INFORMATION MEDIUM, TERMINAL DEVICE, AND PERSONAL IDENTIFICATION METHOD**

(57)    A terminal device includes a comparison data generation part which generates comparison data on the basis of biometric information of a user of a personal information medium, and the personal information medium includes an information processing part which has a storage device in which personal data generated on the basis of biometric information of an owner of the personal information medium is stored. The personal information medium executes a comparison process on the basis of the comparison data transmitted from the terminal device and the personal data, and transmits comparison result information showing the result of the comparison process to the terminal device. The terminal device executes a process corresponding to the comparison result information showing the result of the comparison process transmitted from the personal information medium.

FIG.2

EP 2 963 618 A1

## Description

TECHNICAL FIELD

The present invention relates to a personal authentication system, a personal information medium, a terminal device, and a personal authentication method which allow personal authentication without transmission of personal data stored in a personal information medium to the outside in performing personal authentication by comparing owner's personal data stored in advance in a personal information medium with comparison data of a user of the personal information medium.

BACKGROUND ART

In order to enhance the security of transaction using a credit card and the like, personal authentication is performed in various ways. It is determined whether or not a user of a credit card is a real owner of the credit card, for example, by determining whether or not the handwriting of a signature on the back of the credit card matches the handwriting of a signature on a bill, or by printing the owner's face photo in advance on the credit card and comparing the headshot with the face of the holder.

Further, for a credit card or a cash card using a personal information medium such as a smart card, user authentication is performed by storing personal data such as the fingerprint, iris and blood vessel of the card owner in advance into the card, comparing the personal data with comparison data acquired from the card user at the time of transaction, and determining whether or not the data match. In particular, authentication technology using a body vein pattern has the advantage of being excellent in authentication accuracy, and moreover, has the advantage of being hard to counterfeit because it uses physical inside information and also making user's psychological resistance less (see Non-Patent Document 1).

Non-Patent Document 1: Japan Automatic Identification Systems Association, "Fundamentals of Biometrics for Full Understanding," 1st edition, pp. 47-55, Ohmsha, Ltd., September 5, 2005

A possible configuration in checking whether or not the user of a credit card and the like using a personal information medium is a real owner of the card is a configuration of loading comparison data of the user into a terminal device such as a POS (point-of-sale) terminal, loading personal data stored in the personal information medium into the terminal device, and making the terminal device perform authentication.

Because a POS terminal and the like can be equipped with a high-speed and large-scale information processing device, the configuration stated above has the advantage of being capable of performing a complicated process such as pattern matching of image information in a short time. However, because the configuration requires transmission of the personal data stored in the personal information medium to the side of the terminal device, it is difficult to completely get rid of a risk, for example, a malicious person alters the terminal device and consequently the personal data stored in the personal information medium leaks outside.

SUMMARY

Accordingly, an object of the present invention is to provide a personal authentication system, a personal information medium, a terminal device, and a personal authentication method which allow authentication without transmission of personal data stored in the personal information medium to the side of the terminal device.

A personal authentication system of the present invention to achieve the abovementioned object is a personal authentication system including a personal information medium and a terminal device, and the personal authentication system is for verifying whether or not a user of the personal information medium is an owner of the personal information medium and executing a process.

The terminal device includes a comparison data generation part generating comparison data on a basis of biometric information of a user of the personal information medium;

the personal information medium includes an information processing part having a storage device storing personal data generated on a basis of biometric information of an owner of the personal information medium;

the personal information medium executes a comparison process on a basis of the comparison data transmitted from the terminal device and the personal data, and transmits comparison result information showing a result of the comparison process to the terminal device; and

the terminal device executes a process corresponding to the comparison result information showing the result of the comparison process transmitted from the personal information medium.

In the personal authentication system of the present invention, the comparison data and the personal data may be generated on a basis of information of a finger vein pattern.

In this case, the comparison data and the personal data may be each composed of a metadata portion, a subspace data portion and a Hough transform data portion. The metadata portion may be composed of a collection of data showing an angle distribution of the finger vein pattern, the subspace data portion may be composed of a collection of data in which a value is a number of pixels of a line included in each of a plurality of blocks obtained by dividing the finger vein pattern, and the Hough transform data portion may be composed of a collection of data obtained by executing discrete Hough transform on the finger vein pattern.

In the personal authentication systems of the present invention including the various favorable configurations stated above, the information processing part may execute the comparison process on a basis of a difference between the comparison data and the personal data.

In this case, the information processing part may execute the comparison process on a basis of a relation in size between a given threshold and a sum of absolute values of differences between the comparison data and the personal data.

In the personal authentication systems of the present invention including the various favorable configurations stated above, data showing a sum of metadata may be added to the metadata portion.

In the personal authentication systems of the present invention including the various favorable configurations stated above, data showing a sum of subspace data may be added to the subspace data portion.

In the personal authentication systems of the present invention including the various favorable configurations stated above, data showing a sum of Hough transform data may be added to the Hough transform data portion.

A terminal device of the present invention to achieve the abovementioned object is a terminal device used in a personal authentication system executing a comparison process on a side of a personal information medium. The comparison process is for verifying whether or not a user of the personal information medium is an owner of the personal information medium.

The terminal device includes a comparison data generation part generating comparison data on a basis of biometric information of a user of the personal information medium, and the terminal device transmits the generated comparison data to the personal information medium.

In the terminal device of the present invention, the comparison data may be generated on a basis of information of a finger vein pattern.

In this case, the comparison data may be composed of a metadata portion, a subspace data portion and a Hough transform data portion. The metadata portion may be composed of a collection of data showing an angle distribution of a finger vein pattern, the subspace data portion may be composed of a collection of data in which a value is a number of pixels of a line included in each of a plurality of blocks obtained by dividing the finger vein pattern, and the Hough transform data portion may be composed of a collection of data obtained by executing discrete Hough transform on the finger vein pattern.

In the terminal devices of the present invention including the various favorable configurations stated above, data showing a sum of metadata may be added to the metadata portion.

In the terminal devices of the present invention including the various favorable configurations stated above, data showing a sum of subspace data may be added to the subspace data portion.

In the terminal devices of the present invention including the various favorable configurations stated above, data showing a sum of Hough transform data may be added to the Hough transform data portion.

A personal information medium of the present invention to achieve the abovementioned object is a personal information medium used in a personal authentication system executing a comparison process on a side of the personal information medium, and the comparison process is for verifying whether or not a user of the personal information medium is an owner of the personal information medium.

The personal information medium includes an information processing part having a storage device storing personal data generated on a basis of biometric information of an owner of the personal information medium; and
the personal information medium executes the comparison process on a basis of comparison data transmitted from an external terminal device and the personal data, and transmits comparison result information showing a result of the comparison process to the external terminal device.

In the personal information medium of the present invention, the personal data may be generated on a basis of information of a finger vein pattern.

In this case, the personal data may be composed of a metadata portion, a subspace data portion and a Hough transform data portion. The metadata portion may be composed of a collection of data showing an angle distribution of a finger vein pattern, the subspace data portion may be composed of a collection of data in which a value is a number of pixels of a line included in each of a plurality of blocks obtained by dividing the finger vein pattern, and the Hough transform data portion may be composed of a collection of data obtained by executing discrete Hough transform on the finger vein pattern.

In the personal information mediums of the present invention including the various favorable configurations stated above, the information processing part may execute the comparison process on a basis of a difference between the comparison data and the personal data.

In this case, the information processing part may execute the comparison process on a basis of a relation in size between a given threshold and a sum of absolute values of differences between the comparison data and the personal data.

In the personal information mediums including the various favorable configurations stated above, data showing a sum of metadata may be added to the metadata portion.

In the personal information mediums including the various favorable configurations stated above, data showing a sum of subspace data may be added to the subspace data portion.

In the personal information mediums including the various favorable configurations stated above, data showing a sum of Hough transform data maybe added to the Hough transform data portion.

A personal authentication method of the present invention to achieve the abovementioned object is a personal authentication method using a terminal device and a personal information medium. The terminal device includes a comparison data generation part generating comparison data on a basis of biometric information of a user of the personal information medium, and the personal information medium includes an information processing part having a storage device storing personal data generated on a basis of biometric information of an owner.

The personal authentication method includes:

causing the terminal device to generate comparison data on a basis of biometric information of a user of the personal information medium;
causing the terminal device to transmit the comparison data to the personal information medium;
causing the personal information medium to execute a comparison process on a basis of the comparison data transmitted from the terminal device and the personal data;
causing the personal information medium to transmit comparison result information showing a result of the comparison process to the terminal device; and
causing the terminal device to execute a process corresponding to the comparison result information showing the result of the comparison process transmitted from the personal information medium.

A personal authentication medium used in a personal authentication system of the present invention, a personal authentication medium of the present invention, and a personal authentication medium used in a personal authentication method of the present invention (they may be simply referred to as personal authentication mediums of the present invention hereinafter) are, for example, smart cards. A contact smart card defined in ISO/IEC 7816, and a contactless smart card defined in ISO/IEC 10536, 14443, 15693 and 18092 may be used. Electronic equipment such as a mobile phone containing an e-commerce IC chip may also be used as a personal information medium.

A terminal device used in a personal authentication system, a terminal device of the present invention, and a terminal device used in a personal authentication method of the present invention (they may be simply referred to as terminal devices of the present invention hereinafter) may be configured by using an arithmetic circuit, a storage device (a memory), a known circuit device such as an image sensor, and so on. The configuration of the terminal device is not limited specifically as far as it affects the practice of the present invention.

A finger pattern may be generated by a method such as imaging near-infrared ray reflected inside a living body and acquiring an image containing a vein pattern. Near-infrared ray shows high tissue permeability. On the other hand, near-infrared ray of a specific wavelength (about 800 to 900 nm) shows a property that it is absorbed to reduced hemoglobin in blood in a vein. Therefore, in an image acquired by imaging near-infrared ray from a living body, a vein pattern appears as a shadow.

According to the present invention, a comparison process is performed without transmission of personal data from a personal information medium to the outside, it is possible to get rid of a risk, for example, a malicious person alters a terminal device and consequently the personal data stored in the personal information medium leaks outside.

BRIEF DESCRIPTION OF DRAWINGS

Fig. 1 is a schematic block diagram of a personal authentication system according to a first exemplary embodiment;
Fig. 2 is a schematic flow chart for describing actions performed on the side of a terminal device to generate comparison data of a user;
Figs. 3A and 3B are schematic graphs for describing Hough transform;
Figs. 4A and 4B are schematic graphs for describing Hough transform following Fig. 3B;
Fig. 5A is a schematic diagram of a vein pattern of a user, and Fig. 5B is a schematic distribution diagram in the $\rho$-$\theta$ parameter space of data after Hough transform of the vein pattern;
Fig. 6 is a schematic distribution diagram in the $\rho$-$\theta$ parameter space when first-order and second-order data are extracted from the graph shown in Fig. 5B;
Figs. 7A and 7B are diagrams for describing a method for generating metadata from the data after Hough transform of the vein pattern;
Figs. 8A to 8C are schematic diagrams for describing a method for generating subspace data from thinned data of the vein pattern of the user;
Fig. 9 is a schematic memory map for describing the structure of comparison data generated on the side of the terminal device;
Figs. 10A and 10B are schematic memory maps for describing the relation between registered personal data and comparison data;
Fig. 11 is a schematic flowchart for describing actions performed on the side of a personal information medium for user authentication; and
Fig. 12 is a schematic flowchart for describing a process at step S2102 shown in Fig. 11.

EXEMPLARY EMBODIMENTS

Referring to the attached drawings, a personal authentication system, a personal information medium, a terminal device and a personal authentication method of the present invention will be described below. The present invention is not limited to an exemplary embodiment, and various numerical values and components in the exemplary embodiment are illustrated as examples. In the following description, elements which are identical or elements which have identical functions will be denoted by the same reference characters, and repetition of description will be omitted.

[First Exemplary Embodiment]

A first exemplary embodiment relates to a personal authentication system, a personal information medium, a terminal device and a personal authentication method of the present invention.

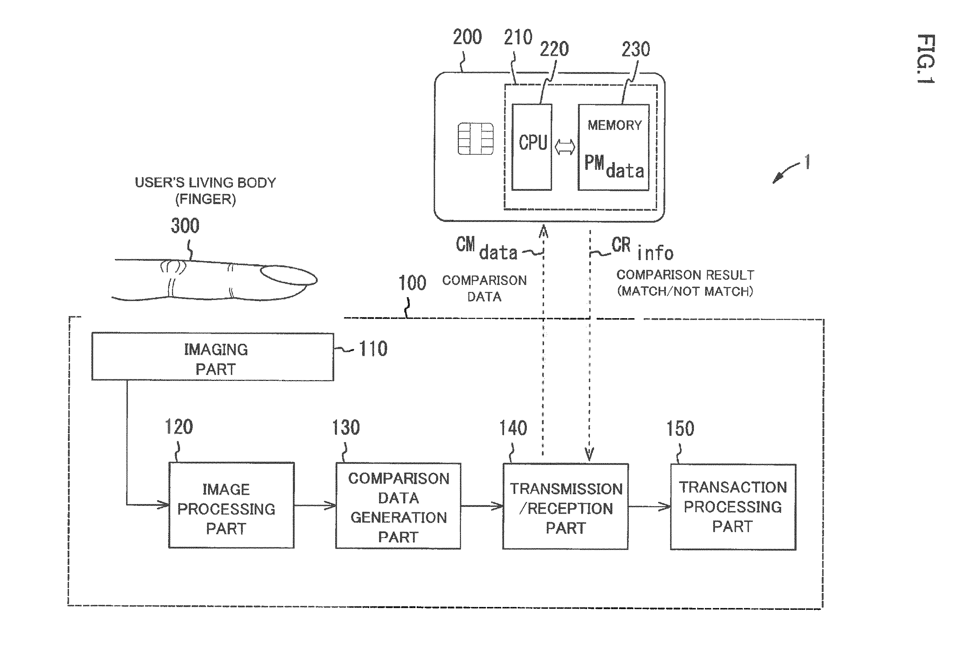

Fig. 1 is a schematic block diagram of the personal authentication system according to the first exemplary embodiment.

A personal authentication system 1 is a system which includes a personal information medium 200 and a terminal device 100 and which is for executing a process by verifying whether or not a user of the personal information medium 200 is the owner of the personal information medium 200. The terminal device 100 includes a comparison data generation part 130 which generates comparison data $CM_{data}$ on the basis of biometric information of a user of the personal information medium 200. The personal information medium 200 includes an information processing part 210 which has a storage device in which personal data $PM_{data}$ generated on the basis of biometric information of the owner of the personal information medium 200 is stored. The personal information medium 200 executes a comparison process on the basis of the comparison data $CM_{data}$ transmitted from the terminal device 100 and the personal data $PM_{data}$, and transmits comparison result information $CR_{info}$ showing the result of the comparison process to the terminal device 100. The terminal device 100 executes a process corresponding to the comparison result information $CR_{info}$ showing the result of the comparison process transmitted from the personal information medium 200.

The comparison data $CM_{data}$ and the personal data $PM_{data}$ are generated on the basis of biometric information. To be more specific, the comparison data $CM_{data}$ and the personal data $PM_{data}$ are generated on the basis of information of a finger vein pattern.

A personal authentication method by the personal authentication system 1 includes:

> causing the terminal device 100 to generate the comparison data $CM_{data}$ on the basis of biometric information of a user of the personal information medium 200;
> causing the terminal device 100 to transmit the comparison data $CM_{data}$ to the personal information medium 200;
> causing the personal information medium 200 to execute a comparison process on the basis of the comparison data $CM_{data}$ transmitted from the terminal device 100 and the personal data $PM_{data}$;
causing the personal information medium 200 to transmit the comparison result information $CR_{info}$ showing the result of the comparison process to the terminal device 100; and
causing the terminal device 100 to execute a process corresponding to the comparison result information $CR_{info}$ showing the result of the comparison process transmitted from the personal information medium 200.

On the assumption that a POC terminal in a shop and the like is the terminal device 100 and a credit card using a smart card is the personal information medium 200, a description will be made below, but it merely illustrates an example. For the convenience of description, the personal information medium 200 may be referred to as the credit card 200.

The outline of the personal authentication system 1 will be described.

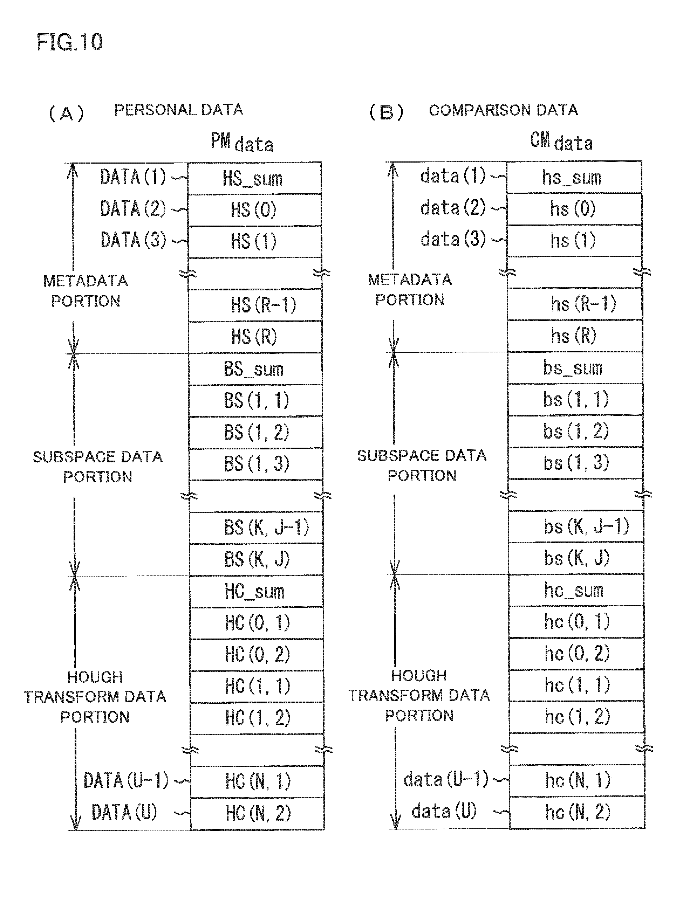

The credit card 200 includes the information processing part 210 including a CPU 220 and a storage device 230. In the storage device 230, registered personal data $PM_{data}$ (personal data generated on the basis of biometric information of an applicant for the credit card) is stored in advance. To be more specific, the registered personal data $PM_{data}$ is generated on the basis of information of a finger vein pattern, and information composed of DATA(1) to DATA(U) shown in Fig. 10A to be described later is stored.

The personal data $PM_{data}$ including DATA(1) to DATA(U) includes: a metadata portion including a collection of data showing the angle distribution of the finger vein pattern; a subspace data portion including a collection of data in which a value is the number of pixels of a diagram contained in each block when the finger vein pattern is divided into a plurality of blocks; and a Hough transform data portion including a collection of data obtained by performing discrete Hough transform on the finger vein pattern. The comparison data $CM_{data}$ including data(1) to data(U) shown in Fig. 10B is composed likewise. The contents of the personal data $PM_{data}$ and the comparison data $CM_{data}$ will be described in detail later. The personal data $PM_{data}$ and the comparison data $CM_{data}$ are generated on the basis of, for example, information of the right index finger (right first finger).

When a user of a credit card performs transaction in a shop, the shop makes the terminal device 100 operate by, for example, putting the credit card 200 presented by the user on a card reader, which is not shown in the drawings, of the terminal device 100. To the credit card 200, electric power necessary for operation is supplied by a known method such as electromagnetic induction.

The terminal device 100 prompts the user to put his/her finger on an imaging part 110 of the terminal device 100. The terminal device 100 acquires a vein image of a finger 300 of the user and generates the comparison data $CM_{data}$ on the basis of the image. Then, the terminal device 100 transmits the generated comparison data $CM_{data}$ to the credit card 200 by a known method. The information processing part 210 of the credit card 200 performs authentication on the basis of the received comparison data $CM_{data}$ and the registered data stored in the storage device 230. In the case of determining that the data match, the information processing part 210 transmits information showing a comparison result "match" to the terminal device 100. On the other hand, in the case of determining that the data do not match, the information processing part 210 transmits a comparison result "not match" to the terminal device 100. In the case of receiving information showing "mach," the terminal device 100 recognizes the user of the credit card as a real owner of the credit card and performs a transaction process. On the other hand, in the case of receiving information showing "not match," the terminal device 100 performs a process such as ask for comparison again or cancel transaction as necessary. The abovementioned process can be performed by, for example, running a program stored in a control circuit, which is not shown in the drawings, of the terminal device 100, and running a program stored in the information processing part 210 of the personal information medium 200.

According to this configuration, a personal authentication process is performed without transmitting personal information stored in the credit card 200 to the terminal device 100. Therefore, there is no risk of leak of the personal information stored in the credit card 200.

The outline of the personal authentication system 1 has been described above. The description of the terminal device 100, the personal information medium 200 and the personal authentication system 1 will be subsequently made in detail.

The terminal device 100 includes:

> an imaging part 110 acquiring an image of a finger of a user;
> an image processing part 120 processing acquired image data;
> a comparison data generation part 130 generating comparison data $CM_{data}$ on a basis of data from the image processing part 120;
> a transmission/reception part 140 transmitting the generated comparison data $CM_{data}$ to a personal information medium 200, and receiving a comparison result transmitted from the personal information medium 200; and
> a transaction processing part 150 performing a given transaction process on a basis of the received comparison result.

The imaging part 110 is made of, for example, an image sensor capable of imaging a near-infrared image, and acquires a near-infrared image including a finger vein pattern. As the imaging part 110, for example, a known image sensor such as an area sensor and a line sensor can be used.

The image processing part 120 obtains a vein pattern by performing given image processing on a near-infrared image acquired by the imaging part 110. Then, the comparison data generation part 130 generates the comparison data $CM_{data}$ on the basis of the vein pattern.

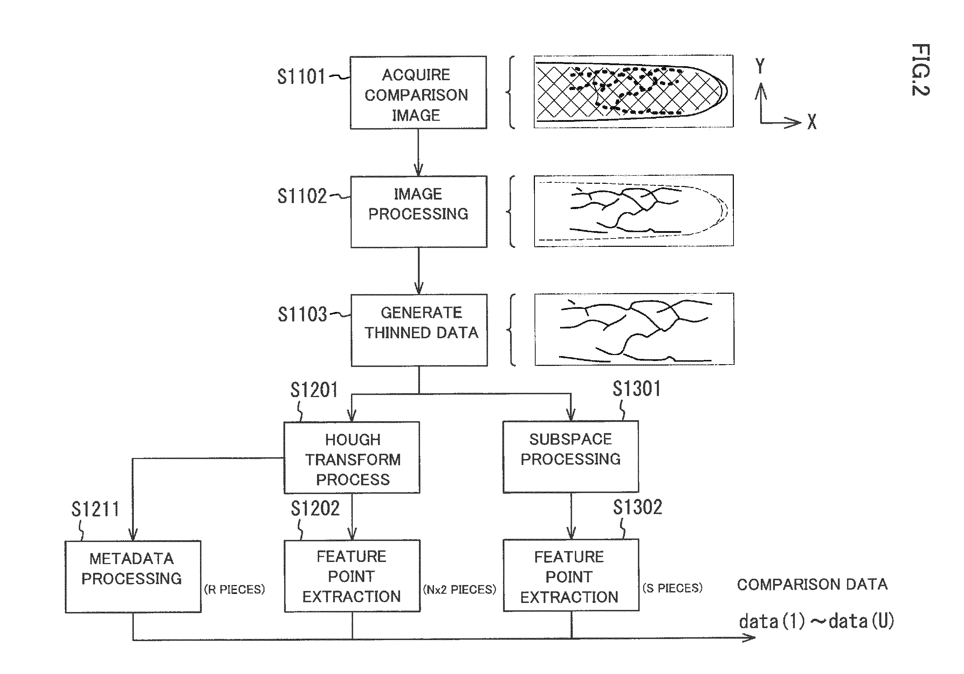

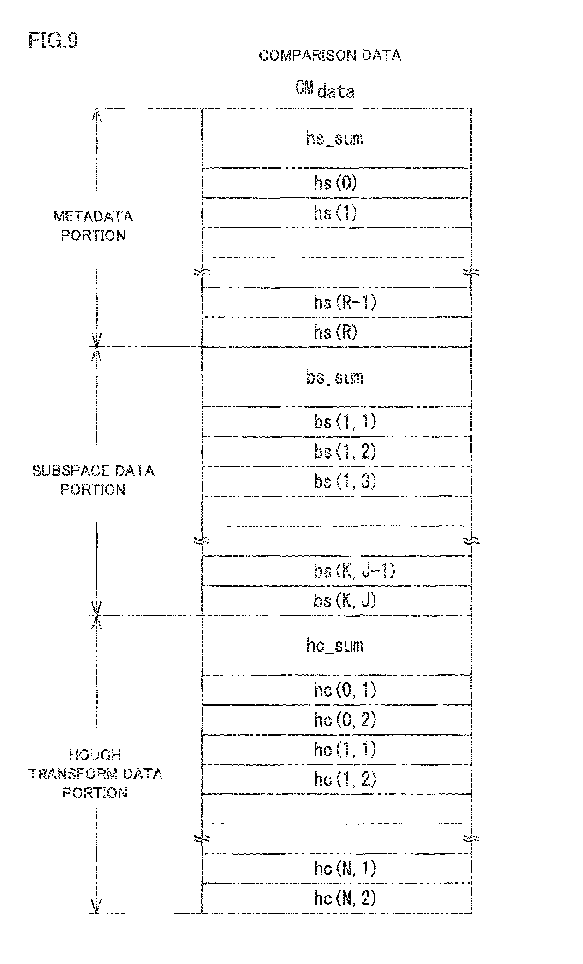

As shown in Fig. 9 to be described later, the comparison data $CM_{data}$ is composed of a metadata portion, a subspace portion, and a Hough transform data portion. Referring to Figs. 2 to 9, actions performed on the side of the terminal device to generate comparison data of a user will be described.

Fig. 2 is a schematic flowchart for describing actions performed on the side of a terminal device to generate comparison data of a user.

For example, the terminal device 100 makes a display part, which is not shown in the drawings, display to prompt a user to perform an action such as "put your finger on an imaging part." Then, the terminal device 100 causes the imaging part 110 to operate and image a near-infrared image of the user's finger 300 and acquire image including a vein pattern (step S1101). Near-infrared ray shows high tissue permeability. On the other hand, near-infrared ray of a specific wavelength (about 800 to 900 nm) shows a property that it is absorbed to reduced hemoglobin in blood in a vein. Therefore, in an image acquired by imaging near-infrared ray from a living body, a vein pattern appears as a shadow. On the right side of step S1101 in Fig. 2, the acquired image is schematically shown. The acquired image contains various noises other than the vein pattern. In the drawing, the vein pattern is shown by dotted line, and the noises are shown by hatching.

Herein, an image of the proximal phalange to the distal phalange of the right index finger (right first finger) is acquired. For the convenience of description, in an image of the finger 300 of a user, a direction in which the finger extends is the x-direction, and a direction orthogonal thereto is the y-direction.

Next, the terminal device 100 executes image processing on the image containing the vein pattern of the finger 300 (step S1102). For example, the terminal device 100 executes a filtering process on the image containing the vein pattern of the finger 300, and performs elimination of information to be noise and an edge extraction process. The filtering process can be performed by a known image processing technique. Because a vein pattern basically extends along a finger, noise processing can be done by a filtering process of eliminating noise extending in the y-direction in the drawing. The edge extraction process can be performed by, for example, calculating a second-order derivative. On the right side of step S1102 in Fig. 2, an image after execution of image processing is schematically shown.

Next, the terminal device 100 makes the image binary or scales up or down the image as necessary, and generates thinned data (skeleton data) of the vein pattern (step S1103). These processes can be performed by a known image processing technique. On the right side of step S1103 in Fig. 2, the thinned data is schematically shown. In the following description, the number of pixels of the thinned data is 160 in the x-direction and 60 in the y-direction, the pixel value of a thinned part is 1, and the pixel value of a background part is 0. However, the number of pixels and the pixel value are not limited to the abovementioned ones.

Next, generation of metadata, subspace data and Hough transform data composing the comparison data $CM_{data}$ will be described. For the convenience of description, the principle of Hough transform will be first described in brief.

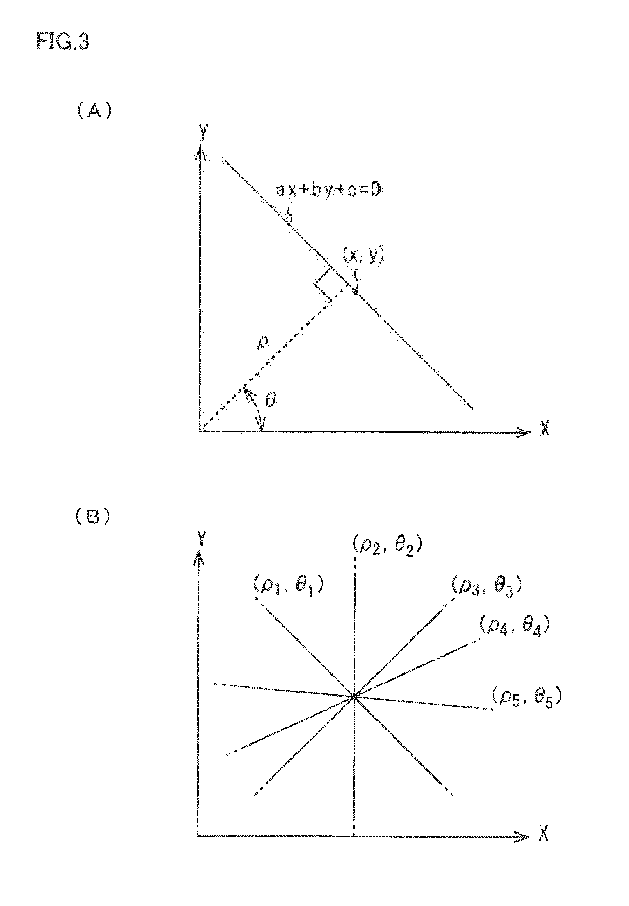

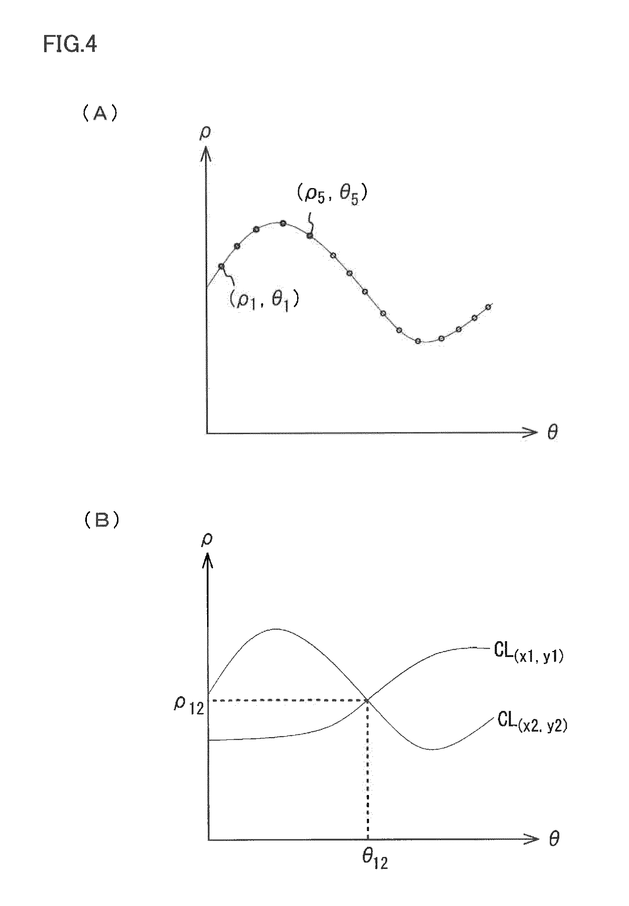

Figs. 3A and 3B and Figs. 4A and 4B are schematic graphs for describing the principle of Hough transform.

When the length of a perpendicular drawn from the origin to a line ax+by+c=0 passing through a certain point (x,y) on the x-y plane is denoted by reference character ρ and the angle formed by the perpendicular and the X-axis is denoted by reference character 0[rad] as shown in Fig. 3A, the line ax+by+c=0 can be expressed as shown by the following equation (1):

$$\rho = x\cos\theta + y\sin\theta \ \ldots \ (1)$$

As shown in Fig. 3B, an infinite number of lines pass through a certain point (x,y) on the X-Y plane, but a combination of $(\rho,\theta)$ is unambiguously determined for each of the lines. Therefore, as a result of calculation using the equation (1), a curved line in the ρ-θ parameter space corresponding to the respective lines passing through a certain point (x,y) is obtained as shown in Fig. 4A.

Fig. 4B shows the relation between a curved line $CL_{(x1,y1)}$ in the ρ-θ parameter space corresponding to an infinite number of lines passing through a certain point $(x_1,y_1)$ on the X-Y plane and a curved line $CL_{(x2,y2)}$ in the ρ-θ parameter space corresponding to an infinite number of lines passing through a certain point $(x_2,y_2)$ on the X-Y plane. The intersection $(\rho_{12},\theta_{12})$ of the curved line $CL_{(x1,y1)}$ and the curved line $CL_{(x2,y2)}$ represents a line passing through the point $(x_1,y_1)$ and the point $(x_2,y_2)$ on the X-Y plane.

The principle of Hough transform has been described above in brief. Feature point extraction based on the Hough transform process shown by steps S1201 and S1202 in Fig. 2 will be subsequently described.

The terminal device 100 transforms the thinned data generated at step S1103 onto the ρ-θ parameter space (step S1201). When the ρ-θ parameter space is divided into MxN and discretized, a value which the angle θ can take is expressed by the following equation (2):

$$\theta = -\pi/2 + n\pi/N \ (n = 0, 1 \ldots, N) \ \ldots \ (2)$$

For the convenience of description, assuming M=N=60 herein, the equation (2) is described as shown by the following equation (2'):

$$\theta = -\pi/2 + n\pi/60 \ (n = 0, 1 \ldots, 60) \ \ldots \ (2')$$

After initializing every element of a two-dimensional array P[ρ,θ] with ρ-θ to 0, the terminal device 100 performs raster scan of the thinned data generated at step S1103 and, in a case where a pixel value is 1, finds ρ for the (x,y) at π/N[rad] intervals on the basis of the equation (1), rounds it to the nearest integer, and performs voting such as adding 1 to the value of P[ρ,θ].

Because the image of the thinned data has a plurality of object points, the terminal device 100 ranks each θ on the basis of the ρ-θ parameter space and an addition value Z of the voted value. The value of the addition value Z is determined on the basis of the shape of the image of the thinned data, and shows information of ρ and θ and also the characteristic of the skeleton.

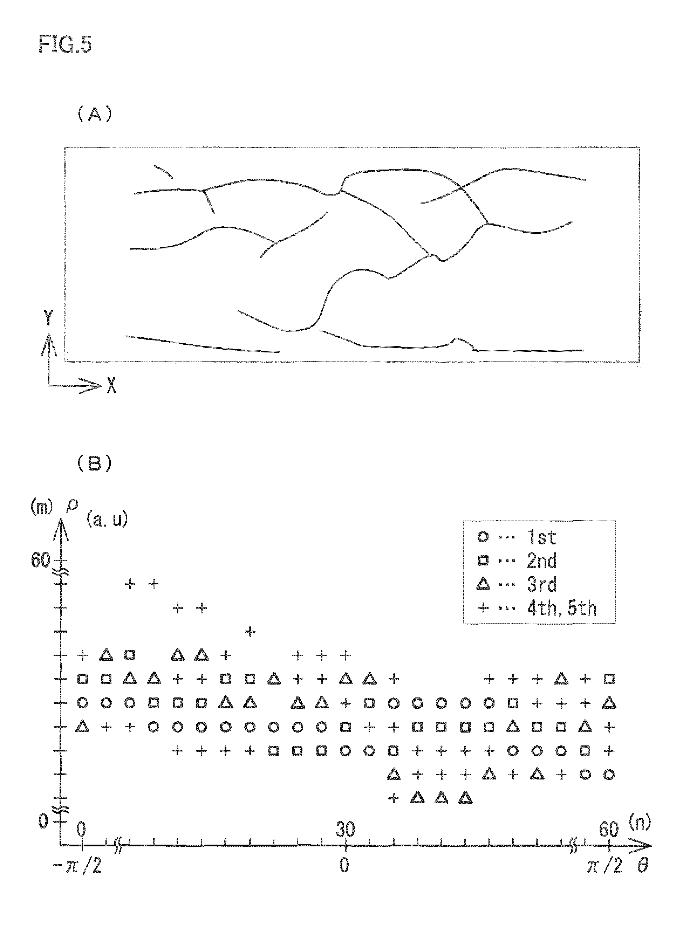

The terminal device 100 transforms the thinned data generated at step S1103 onto the ρ-θ parameter space in accordance with the procedure as described above. The result of Hough transform of a user's vein pattern shown in Fig. 5A is schematically shown in Fig. 5B.

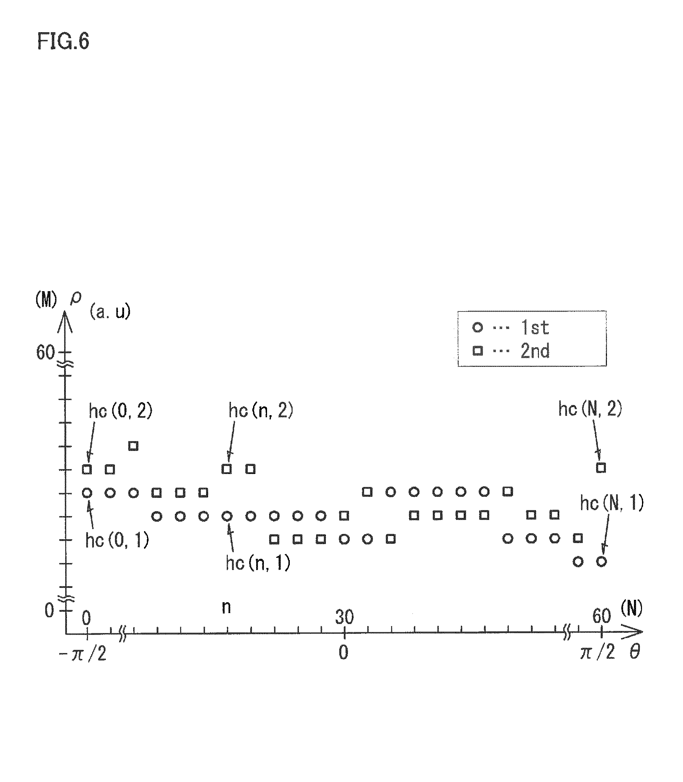

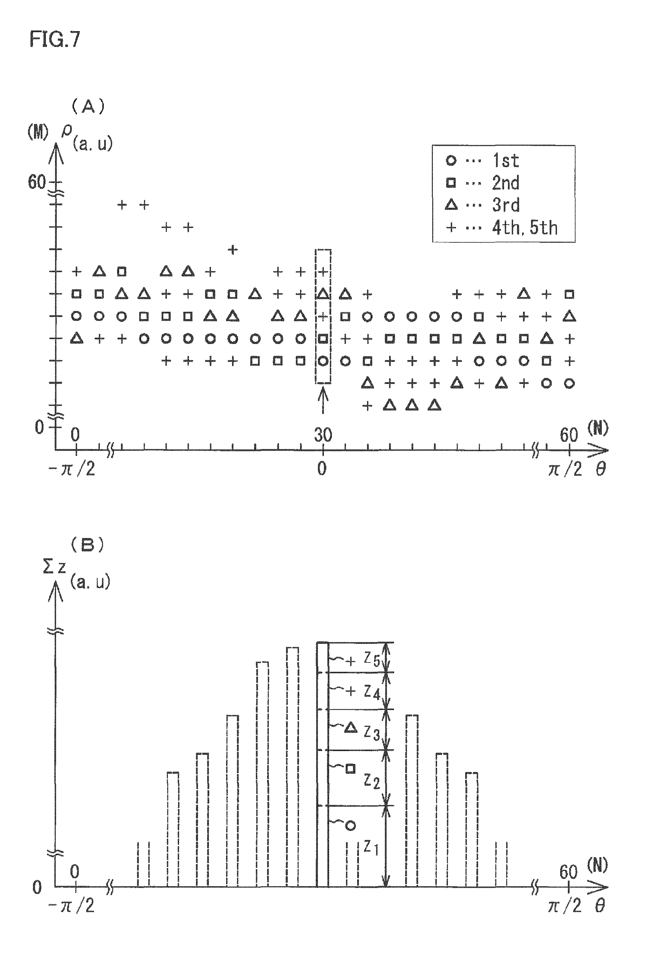

In Fig. 5B, symbol "○," symbol "□" and symbol "△" express first-ranked, second-ranked and third-ranked feature points based on the addition value Z, respectively. For the convenience of illustration, both fourth-ranked feature points and fifth-ranked feature points are expressed by symbol "+" and illustration of sixth- or lower-ranked feature points is omitted. These symbols express the same also in Figs. 6, 7A and 7B to be described later.

Next, on the basis of the result of the Hough transform process, the terminal device 100 extracts feature points (step S1202). Up to which rank feature points are selected and used may be determined in view of the accuracy of authentication and the size of the personal data $PM_{data}$ (template) stored in the personal information medium 200. Herein, a description will be made assuming first-ranked and second-ranked feature points are selected and used. A Hough transform data portion of the comparison data $CM_{data}$ shown in Fig. 9 is composed of the first-ranked and second-ranked data thus extracted. The first rank value corresponding to the $n^{th}$ angle θ is denoted by reference character hc(n,1), and the second rank value is denoted by reference character hc(n,2). Fig. 6 is a schematic distribution diagram in the ρ-θ parameter space when the first-ranked and second-ranked data are extracted from the graph shown in Fig. 5B.

To the Hough transform data portion, data showing the sum of Hough transform data may be added.

Herein, a value hc_sum obtained by finding the sum of the values of hc(0,1) to hc(N,2) is contained in the comparison data $CM_{data}$. This is equally true of to the personal data $PM_{data}$ stored in the personal information medium 200. In the example shown in Fig. 9, the value hc_sum is located at the head of the Hough transform data portion.

Feature point extraction based on the Hough transform process shown in Fig. 2 has been described above. Next, step S1211 of metadata processing shown in Fig. 2 will be described.

Metadata, which is data showing the outline of the thinned data generated at step S1103, is generated by using the result of the Hough transform process at step S1201.

P[ρ,θ] after the Hough transform process will be focused on. For example, in the equation (2'), θ=0 when n=30. Herein, by adding voting values Z at θ=0, a value corresponding to the sum of the lengths of veins along the longitudinal direction of the finger in the thinned data generated at step S1103 is found. For example, if the sixth- and lower-ranked data are ignored, the operation described above is expressed as shown in Figs. 7A and 7B. Reference characters $Z_1$ to $Z_5$ denote voting values of the first rank to the fifth rank at θ=0, respectively.

Therefore, by adding voting values Z at θ corresponding to each of n = 0, 1 ..., N, two-dimensional data formed by θ and the sum of the voting values Z corresponding to θ is generated (refer to Fig. 7B). This two-dimensional data, which is data corresponding to the angle distribution of the lines in the thinned data generated at step S1103, will be referred to as metadata herein.

By comparing metadata generated from thinned data, it is possible to perform processing without executing a complicated calculation process. This is because similar thinned data show similar angle distributions of lines in general.

The data thus generated is stored into the metadata portion of the comparison data $CM_{data}$ shown in Fig. 9. When N=60, metadata is composed of 61 pieces of data. However, in determination of the similarity of angle distributions of lines, there is no need to use all of the data necessarily. For example, only data corresponding to n = 0, 10, 20, 30, 40, 50 and 60 may be selected in an aspect. Herein, R pieces of data selected at proper spaces among (N+1) pieces of data are extracted.

The metadata portion of the comparison data $CM_{data}$ shown in Fig. 9 is composed of the R pieces of data thus extracted. The R pieces of data are denoted by reference characters hs(1) to hs(R).

To the metadata portion, data showing the sum of the metadata may be added. Herein, a value hs_sum obtained by finding the sum of the values of hs(1) to hs(R) is further contained in the comparison data $CM_{data}$. This is equally true of the personal data $PM_{data}$ stored in the personal information medium 200. In the example shown in Fig. 9, the value hs_sum is located at the head of the metadata portion.

Step S1211 of the metadata processing shown in Fig. 2 has been described above. Next, feature point extraction based on subspace processing at steps S1301 and S1302 in Fig. 2 will be described.

Data acquired by subspace processing is also data showing the outline of the thinned data generated at step S1103. However, unlike the data acquired by the metadata processing, it is generated by using the thinned data generated at step S 1103.

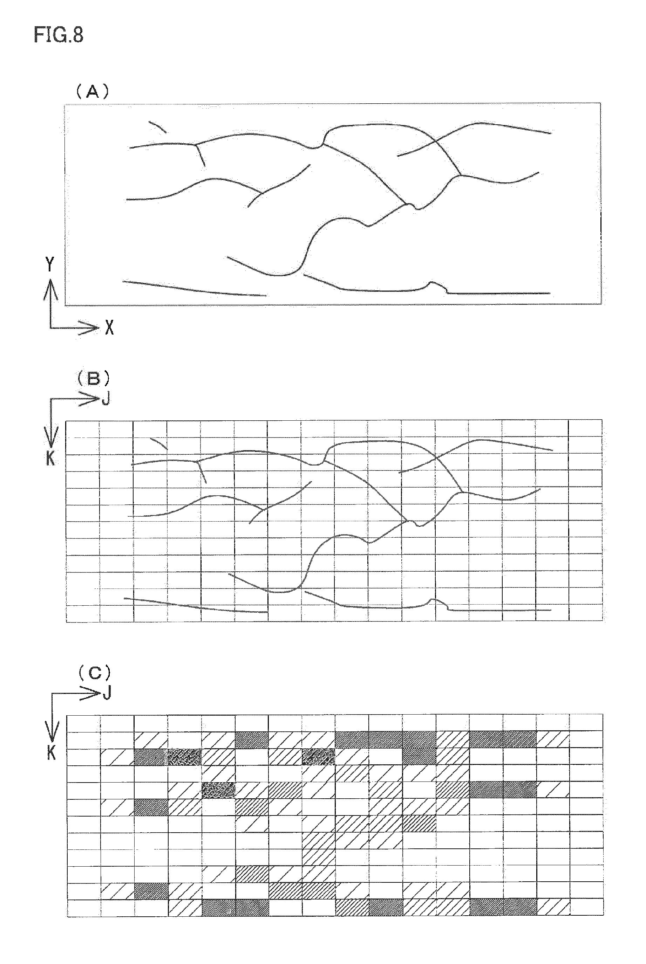

Figs. 8A to 8C are schematic diagrams for describing a method for generating subspace data from thinned data of a user's vein pattern.

First, the terminal device 100 divides the thinned data generated at step S1103 into blocks of given size (refer to Figs. 8A and 8B). Assuming the thinned data is divided into J blocks in the X-direction and K blocks in the Y-direction, when the number of pixels of the thinned data is 160 in the X-direction and 60 in the Y-direction and, for example, the size of the block is 10×5, the value of J is 16 and the value of K is 12.

Then, the number of pixels of a thin line contained in each of the blocks is the value of the block (subspace) (see Figs. 8B and 8C). In Fig. 8C, the relation in size of numbers of pixels of thin lines is schematically shown by the density of hatching.

The subspace data portion of the comparison data $CM_{data}$ shown in Fig. 9 is composed of the data thus generated. Data on the $j^{th}$ column (j = 1, 2 ..., J) and the $k^{th}$ row (k = 1, 2 ..., K) is denoted by reference character bs(k,j). When J=16 and K=12, the subspace data is composed of 192 pieces of data.

To the subspace data portion, data showing the sum of the subspace data may be added. Herein, the comparison data $CM_{data}$ further contains a value bs_sum acquired by finding the sum of the values from bs(1,1) to bs(K,J). This is equally true of the personal data $PM_{data}$ stored in the personal information medium 200. In the example shown in Fig. 9, the value bs_sum is located at the head of the subspace data portion of the comparison data $CM_{data}$.

Feature point extraction based on the subspace processing has been described above.

The merit of feature point extraction based on subspace processing is that change of a difference due to displacement in matching calculation depends on a shape characteristic of a skeleton.

The terminal device 100 generates a data string composed of the abovementioned data hs_sum and hs(1) to hs(R), bs_sum and bs(1,1) to bs(K,J), and hc_sum and hc(0,1) to hc(N,2), as data(1) to data(U) composing the comparison data $CM_{data}$, and transmits to the personal information medium 200. Depending on the values of N, R, J and K mentioned above, it is possible to limit the size of the comparison data $CM_{data}$ to hundreds of bytes.

The credit card 200 temporarily stores the received comparison data $CM_{data}$ into the storage device 230 and executes a comparison process. Referring to Figs. 1, 10, 11 and 12, the terminal device 100, the personal information medium 200 and the personal authentication system 1 will be subsequently described in detail.

As stated above, the registered personal data $PM_{data}$ is stored in advance in the storage device 230 of the credit card 200 shown in Fig. 1. To be more specific, the registered personal data $PM_{data}$ is generated on the basis of information of a finger vein, and information composed of DATA(1) to DATA(U) shown in Fig. 10A are stored therein. Storage of personal information into the credit card 200 can be performed by a known method as necessary depending on the standard of a smart card so that the personal information cannot be retrieved from outside.

DATA(1) to DATA(U), which are data generated in advance on the basis of biometric information of the applicant for a credit card, are configured as data corresponding to the comparison data $CM_{data}$. A description of a method for generating the personal data $PM_{data}$ will be omitted because it is the same as the method for generating the comparison data $CM_{data}$. Data corresponding to the abovementioned data hc_sum will be denoted by HC_sum, and data corresponding to the abovementioned data hc(0,1) to hc(N,2) will be denoted by HC(0,1) to HC(N,2). Data corresponding to the abovementioned data hs_sum will be denoted by HS_sum, and data corresponding to the abovementioned data hs(1) to hs(R) will be denoted by HS(1) to HS(R). Data corresponding to the abovementioned data bs_sum will be denoted by BS_sum, and data corresponding to the abovementioned data bs(1,1) to bs(K,J) will be denoted by BS(1,1) to BS(K,J).

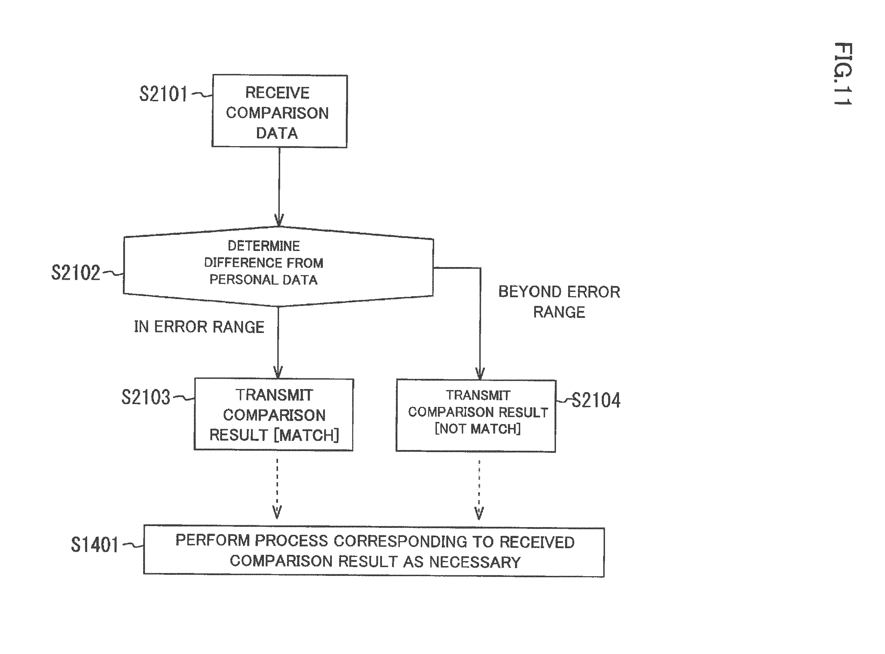

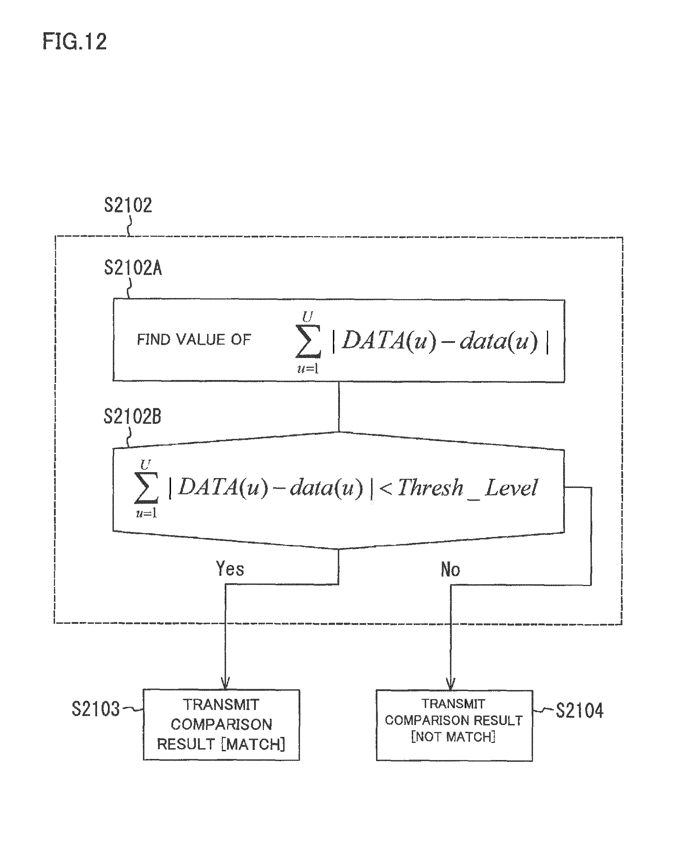

Referring to Figs. 11 and 12, actions of the personal information medium 200 and so on will be described in detail.

The personal information medium 200 receives the data(1) to data(U) composing the comparison data $CM_{data}$ (step S2101), and temporarily stores into the storage device 230. Then, the personal information medium 200 determines a difference between the DATA(1) to DATA(U) composing the personal data $PM_{data}$ and the data(1) to data(U) composing the comparison data $CM_{data}$. In the case of determining that the data match, the personal information medium 200 transmits comparison result information $CR_{info}$ showing a comparison result [match] (for example, a value "1") to the terminal device 100 (step S2103). In the case of determining that the data do not match, the personal information medium 200 transmits comparison result information $CR_{info}$ showing a comparison result [not match] (for example, a value "0") to the terminal device 100 (step S2104). The abovementioned process can be executed by running a program stored in the information processing part 210.

The terminal device 100 executes a process depending on the received comparison result information $CR_{info}$ as necessary (step S1401). For example, in a case where the terminal device 100 receives the comparison result information $CR_{info}$ showing [match], the transaction processing part 150 of the terminal device 100 recognizes the user of the credit card as the real owner of the credit card, and executes transaction processing. In a case where the terminal device 100 receives the comparison result information CRinfo showing [not match], the transaction processing part 150 executes a process of, for example, asking for comparison again and cancelling transaction.

Step S2102 will be described in detail. As shown in Fig. 12, step S2102 includes step S2102A of finding the sum of absolute values of the respective errors between the DATA(1) to DATA(U) composing the personal data $PM_{data}$ and the data(1) to data (U) composing the comparison data $CM_{data}$, and step S2102B of determining whether the sum of the absolute values of the errors is smaller than a given threshold Thresh_Level.

The given value Thresh_level can be set as necessary on the basis of an experiment or the like so that authentication can be performed with sufficient authentication accuracy, in view of False Rejection Rate (FRR) and False Acceptance Rate (FAR).

The terminal device 100, the personal information medium 200 and the personal authentication system 1 have been described above in detail.

The processing at step S2102A shown in Fig. 12 can be performed by an arithmetic process of calculating differences of data strings of several hundred bytes and adding the absolute values thereof. Therefore, even a comparatively slow-speed and small-scale processing part can perform the authentication process in a time (for example, about two or three seconds) without any trouble in practical use.

A possible configuration for the purpose of further increase of the processing speed may be a configuration that only part of the comparison data $CM_{data}$ and the person data $PM_{data}$, for example, only the metadata portions are compared. As stated above, metadata is data corresponding to the angle distribution of lines in thinned data, and the angle distributions of lines in similar thinned data are similar to each other in general. Moreover, a possible configuration in some cases may be a configuration that only the HS_sum, BS_sum and HC_sum portions and the hs_sum, bs_sum and hs_sum portions are compared.

Although the present invention has been described above on the basis of the preferred exemplary embodiment, the present invention is not limited to the exemplary embodiment. The specific configuration and structure of the components of the biometric authentication system in the exemplary embodiment are illustrated as an example and may be changed as necessary.

For example, comparison data and person data have been described as a data string in which a metadata portion, a subspace data portion and a Hough transform data portion are arranged in this order, but are not limited to this. As far as there is no trouble in comparison between comparison data and personal data, data arrangement in a data string is not limited particularly.

There may also be a case where, due to variation in position of a finger at the time of imaging, the subspace data bs(k,j) composing the comparison data does not correspond to the subspace data BS(k,j) composing the personal data and any one of bs(k-1,j), bs(k+1,j), bs(k,j-1), bs(kj+1), bs(k-1,j-1), bs(k-1,j+1), bs(k+1,j-1) and bs(k+1,j+1) corresponds thereto. In this case, the system can be configured to, when taking differences of subspace data, take eight sums of the absolute values of the differences in a state where the correspondence of the data is displaced in eight directions on the plane, and select and adopt the minimum from among the eight.

For further increase of secrecy, personal data and comparison data may be encoded. A method of encoding is not particularly limited and a known method can be used. In consideration of processing load in decoding, the system may be configured to encode only part of data, for example, only the Hough transform data portion.

The present invention is based upon and claims the benefit of priority from Japanese patent application No. 2014-018101, filed on January 31, 2014, the disclosure of which is incorporated herein in its entirety by reference.

DESCRIPTION OF REFERENCE NUMERALS

1       biometric authentication system
100     terminal device
110     imaging part
120     image processing part
130     comparison data generation part
140     transmission/reception part
150     transaction processing part
200     personal information medium (credit card using smart card)
210     information processing part
220     central processing unit (CPU)
230     storage device (memory)

**Claims**

1.  A personal authentication system including a personal information medium and a terminal device, the personal authentication system being for verifying whether or not a user of the personal information medium is an owner of the personal information medium and executing a process, wherein:

    the terminal device includes a comparison data generation part generating comparison data on a basis of biometric information of a user of the personal information medium;
    the personal information medium includes an information processing part having a storage device storing personal data generated on a basis of biometric information of an owner of the personal information medium;
    the personal information medium executes a comparison process on a basis of the comparison data transmitted from the terminal device and the personal data, and transmits comparison result information showing a result of the comparison process to the terminal device; and
    the terminal device executes a process corresponding to the comparison result information showing the result of the comparison process transmitted from the personal information medium.

2.  The personal authentication system according to Claim 1, wherein the comparison data and the personal data are generated on a basis of information of a finger vein pattern.

3.  The personal authentication system according to Claim 2, wherein the comparison data and the personal data are each composed of a metadata portion, a subspace data portion and a Hough transform data portion, the metadata portion being composed of a collection of data showing an angle distribution of the finger vein pattern, the subspace data portion being composed of a collection of data in which a value is a number of pixels of a line included in each of a plurality of blocks, the blocks being obtained by dividing the finger vein pattern, and the Hough transform data portion being composed of a collection of data obtained by executing discrete Hough transform on the finger vein pattern.

4.  The personal authentication system according to any one of Claims 1 to 3, wherein the information processing part executes the comparison process on a basis of a difference between the comparison data and the personal data.

5.  The personal authentication system according to Claim 4, wherein the information processing part executes the comparison process on a basis of a relation in size between a given threshold and a sum of absolute values of differences between the comparison data and the personal data.

6.  The personal authentication system according to any one of Claims 3 to 5, wherein data showing a sum of metadata is added to the metadata portion.

7.  The personal authentication system according to any one of Claims 3 to 6, wherein data showing a sum of subspace data is added to the subspace data portion.

8.  The personal authentication system according to any one of Claims 3 to 7, wherein data showing a sum of Hough transform data is added to the Hough transform data portion.

9. A terminal device used in a personal authentication system executing a comparison process on a side of a personal information medium, the comparison process being for verifying whether or not a user of the personal information medium is an owner of the personal information medium,
the terminal device including a comparison data generation part generating comparison data on a basis of biometric information of a user of the personal information medium, and the terminal device transmitting the generated comparison data to the personal information medium.

10. The terminal device according to Claim 9, wherein the comparison data is generated on a basis of information of a finger vein pattern.

11. The terminal device according to Claim 10, wherein the comparison data is composed of a metadata portion, a subspace data portion and a Hough transform data portion, the metadata portion being composed of a collection of data showing an angle distribution of a finger vein pattern, the subspace data portion being composed of a collection of data in which a value is a number of pixels of a line included in each of a plurality of blocks, the blocks being obtained by dividing the finger vein pattern, and the Hough transform data portion being composed of a collection of data obtained by executing discrete Hough transform on the finger vein pattern.

12. A personal information medium used in a personal authentication system executing a comparison process on a side of the personal information medium, the comparison process being for verifying whether or not a user of the personal information medium is an owner of the personal information medium, wherein:

    the personal information medium includes an information processing part having a storage device storing personal data generated on a basis of biometric information of an owner of the personal information medium; and
    the personal information medium executes the comparison process on a basis of comparison data transmitted from an external terminal device and the personal data, and transmits comparison result information showing a result of the comparison process to the external terminal device.

13. The personal information medium according to Claim 12, wherein the personal data is generated on a basis of information of a finger vein pattern.

14. The personal information medium according to Claim 13, wherein the personal data is composed of a metadata portion, a subspace data portion and a Hough transform data portion, the metadata portion being composed of a collection of data showing an angle distribution of a finger vein pattern, the subspace data portion being composed of a collection of data in which a value is a number of pixels of a line included in each of a plurality of blocks, the blocks being obtained by dividing the finger vein pattern, and the Hough transform data portion being composed of a collection of data obtained by executing discrete Hough transform on the finger vein pattern.

15. A personal authentication method using a terminal device and a personal information medium, the terminal device including a comparison data generation part generating comparison data on a basis of biometric information of a user of the personal information medium, and the personal information medium including an information processing part having a storage device storing personal data generated on a basis of biometric information of an owner,
the personal authentication method comprising:

    causing the terminal device to generate comparison data on a basis of biometric information of a user of the personal information medium;
    causing the terminal device to transmit the comparison data to the personal information medium;
    causing the personal information medium to execute a comparison process on a basis of the comparison data transmitted from the terminal device and the personal data;
    causing the personal information medium to transmit comparison result information showing a result of the comparison process to the terminal device; and
    causing the terminal device to execute a process corresponding to the comparison result information showing the result of the comparison process transmitted from the personal information medium.

# FIG.1

FIG.1 — Block diagram including USER'S LIVING BODY (FINGER) 300, IMAGING PART 110, IMAGE PROCESSING PART 120, COMPARISON DATA GENERATION PART 130, TRANSMISSION/RECEPTION PART 140, TRANSACTION PROCESSING PART 150, system 100; and card 200 with CPU 210/220, MEMORY 230 ($PM_{data}$), 1. $OM_{data}$ COMPARISON DATA, $CR_{info}$ COMPARISON RESULT (MATCH/NOT MATCH).

FIG.2

S1101 ACQUIRE COMPARISON IMAGE → S1102 IMAGE PROCESSING → S1103 GENERATE THINNED DATA

S1301 SUBSPACE PROCESSING → S1302 FEATURE POINT EXTRACTION (S PIECES)

S1201 HOUGH TRANSFORM PROCESS → S1202 FEATURE POINT EXTRACTION (N×2 PIECES)

S1211 METADATA PROCESSING (R PIECES)

COMPARISON DATA data(1)～data(U)

FIG.3

（A）

$$ax + by + c = 0$$

$(x, y)$

$\rho$

$\theta$

Y

X

（B）

$(\rho_2, \theta_2)$

$(\rho_1, \theta_1)$

$(\rho_3, \theta_3)$

$(\rho_4, \theta_4)$

$(\rho_5, \theta_5)$

Y

X

FIG.4

（A）

（B）

FIG.5

（A）

（B）

FIG.6

FIG.7

FIG.8

(A)

(B)

(C)

FIG.9

COMPARISON DATA

CM data

| | |
|---|---|
| METADATA PORTION | hs_sum |
| | hs (0) |
| | hs (1) |
| | |
| | hs (R-1) |
| | hs (R) |
| SUBSPACE DATA PORTION | bs_sum |
| | bs (1, 1) |
| | bs (1, 2) |
| | bs (1, 3) |
| | |
| | bs (K, J-1) |
| | bs (K, J) |
| HOUGH TRANSFORM DATA PORTION | hc_sum |
| | hc (0, 1) |
| | hc (0, 2) |
| | hc (1, 1) |
| | hc (1, 2) |
| | |
| | hc (N, 1) |
| | hc (N, 2) |

FIG.10

(A) PERSONAL DATA

PM data

| | |
|---|---|
| DATA(1) ～ | HS_sum |
| DATA(2) ～ | HS(0) |
| DATA(3) ～ | HS(1) |
| METADATA PORTION | HS(R-1) |
| | HS(R) |
| | BS_sum |
| | BS(1, 1) |
| | BS(1, 2) |
| SUBSPACE DATA PORTION | BS(1, 3) |
| | BS(K, J-1) |
| | BS(K, J) |
| | HC_sum |
| | HC(0, 1) |
| | HC(0, 2) |
| HOUGH TRANSFORM DATA PORTION | HC(1, 1) |
| | HC(1, 2) |
| DATA(U-1) ～ | HC(N, 1) |
| DATA(U) ～ | HC(N, 2) |

(B) COMPARISON DATA

CM data

| | |
|---|---|
| data(1) ～ | hs_sum |
| data(2) ～ | hs(0) |
| data(3) ～ | hs(1) |
| METADATA PORTION | hs(R-1) |
| | hs(R) |
| | bs_sum |
| | bs(1, 1) |
| | bs(1, 2) |
| SUBSPACE DATA PORTION | bs(1, 3) |
| | bs(K, J-1) |
| | bs(K, J) |
| | hc_sum |
| | hc(0, 1) |
| | hc(0, 2) |
| HOUGH TRANSFORM DATA PORTION | hc(1, 1) |
| | hc(1, 2) |
| data(U-1) ～ | hc(N, 1) |
| data(U) ～ | hc(N, 2) |

EP 2 963 618 A1

FIG.11

S2101 — RECEIVE COMPARISON DATA

S2102 — DETERMINE DIFFERENCE FROM PERSONAL DATA

BEYOND ERROR RANGE

IN ERROR RANGE

S2104 — TRANSMIT COMPARISON RESULT [NOT MATCH]

S2103 — TRANSMIT COMPARISON RESULT [MATCH]

S1401 — PERFORM PROCESS CORRESPONDING TO RECEIVED COMPARISON RESULT AS NECESSARY

22

FIG.12

S2102

S2102A

FIND VALUE OF $\sum\limits_{u=1}^{U} |DATA(u) - data(u)|$

S2102B

$\sum\limits_{u=1}^{U} |DATA(u) - data(u)| < Thresh\_Level$

Yes                                    No

S2103 — TRANSMIT COMPARISON RESULT [MATCH]

TRANSMIT COMPARISON RESULT [NOT MATCH] — S2104

## INTERNATIONAL SEARCH REPORT

| | International application No. |
|---|---|
| | PCT/JP2015/000300 |

**A. CLASSIFICATION OF SUBJECT MATTER**
*G06T7/00*(2006.01)i, *G06F21/32*(2013.01)i

According to International Patent Classification (IPC) or to both national classification and IPC

**B. FIELDS SEARCHED**

Minimum documentation searched (classification system followed by classification symbols)
G06T7/00, G06F21/32

Documentation searched other than minimum documentation to the extent that such documents are included in the fields searched
Jitsuyo Shinan Koho          1922-1996    Jitsuyo Shinan Toroku Koho    1996-2015
Kokai Jitsuyo Shinan Koho    1971-2015    Toroku Jitsuyo Shinan Koho    1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-4104 A  (Hitachi-Omron Terminal Solutions, Corp.), | 1,2,4,5,9, 10,12,13,15 |
| Y | 10 January 2008 (10.01.2008), claims 1, 4, 5; paragraphs [0016], [0017] (Family: none) | 3,6-8,11,14 |
| Y | JP 63-153687 A  (Fujitsu Ltd.), 27 June 1988 (27.06.1988), claim 1 (Family: none) | 3,6-8,11,14 |
| Y | JP 11-339049 A  (Hitachi Maxell, Ltd.), 10 December 1999 (10.12.1999), claim 1 (Family: none) | 3,6-8,11,14 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 March 2015 (25.03.15) | 07 April 2015 (07.04.15) |

| Name and mailing address of the ISA/ | Authorized officer |
|---|---|
| Japan Patent Office 3-4-3,Kasumigaseki,Chiyoda-ku, Tokyo 100-8915,Japan | Telephone No. |

Form PCT/ISA/210 (second sheet) (July 2009)

**INTERNATIONAL SEARCH REPORT**

International application No.

PCT/JP2015/000300

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 2011-44102 A  (Sony Corp.),<br>03 March 2011 (03.03.2011),<br>claim 1<br>(Family: none) | 3,6-8,11,14 |
| Y | JP 2009-105904 A  (Hitachi, Ltd.),<br>14 May 2009 (14.05.2009),<br>paragraph [0011]<br>(Family: none) | 6-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014018101 A

**Non-patent literature cited in the description**

- Fundamentals of Biometrics for Full Understanding. Ohmsha, Ltd, 05 September 2005, 47-55